# EUROPEAN PATENT SPECIFICATION

(11) **EP 1 206 730 B1**
(45) Date of publication and mention of the grant of the patent: **14.01.2004**
(21) Application number: 00947484.2
(22) Date of filing: 17.07.2000
(51) Int. Cl.: G04G 11/00

(54) **METHOD AND SYSTEM FOR DYNAMICALLY UPDATING A BANNER FOR A COMMUNICATION DEVICE**
VERFAHREN UND SYSTEM ZUM DYNAMISCHEN ERNEUERN DES BANNERS EINES KOMMUNIKATONSGERÄTES
PROCEDE ET SYSTEME DE MISE A JOUR DYNAMIQUEMENT D'UNE PAGE D'ACCUEIL POUR UN DISPOSITIF DE COMMUNICATION

(30) Priority: 23.08.1999 US 379807
(43) Date of publication of application: 22.05.2002
(73) Proprietor: QUALCOMM INCORPORATED, San Diego, CA 92121-1714 (US)
(72) Inventor: KIRBAS, Bilhan, La Jolla, CA 92037 (US); KHAZAKA, Samir, K., San Diego, CA 92108 (US); CHMAYTELLI, Mazen, San Diego, CA 92110 (US)
(74) Representative: Wagner, Karl H., Dipl.-Ing.
(86) International application number: PCT/US2000/019521
(87) International publication number: WO 2001/014939

(56) References cited:
- FR-A- 2 614 115
- US-A- 3 999 050
- US-A- 4 712 923

## Description

### FIELD OF THE INVENTION

The present invention relates generally to the field of communication devices. In particular, the present invention relates to a portable communication device having a dynamically updated banner.

### BACKGROUND OF THE INVENTION

In portable communication devices such as, for example, cellular telephones, it is typical to display a message in the form of text on the display screen of the telephone. This text message is commonly known as a banner and is displayed by default in the standby mode during operation of the telephone. Although a banner is static in nature, it is capable of being manually edited by the user of the telephone at any time. The manual editing of the banner is typically accomplished by way of accessing a menu item from a list of menu items.

The act of accessing the menu item to edit the banner can become quite time consuming and burdensome to the user since it typically involves manually searching through a long list of menu items. Since banners are static and are not capable of being edited with ease, they usually only contain generic information which requires little or no editing by the user in the future. For this reason, banners have been used (often for the entire lifetime of the telephone), for example, merely to display the user's name. Having the user's name (or any message for that matter) continuously displayed as the banner, i.e. regardless of the date, tends to result in an inefficient use of the display screen during the standby mode. It is therefore desirable to provide a banner that not only displays meaningful information, but a banner that changes on a dynamic basis to thereby convey significant information relevant to the current date.

It is therefore an object of the present invention to provide a banner that displays updated and meaningful information on a dynamic basis.

It is a further object of the present invention to provide a banner that changes on a dynamic basis to thereby convey significant information relevant to the current date.

These and other objects and advantages of the invention will become more fully apparent from the description and claims which follow or may be learned by the practice of the invention.

Further attention is drawn to the FR-2,614, 115, which discloses a wrist watch or a wall clock for astrological, religious. philosophical or other data on a display of the watch subject to the time of the day or the date, i.e. one having the capability of displaying a message at a special date/time. The data can be either inserted via a keyboard or via a serial interface which is embodied as a plug connector mounted to the casing of the watch.

Furthermore attention is drawn to the US-Patent 3,999,050, which discloses an electronic diary having combined clock-calendar means and diary storage means wherein a random access memory is employed in a diary mode of operation for the storage and readout of preselected daily schedule and message events keyed for visual display in response to equal time comparisons with real time of day TOD as generated by the clock-calendar means. The electronic diary is capable of being added to present state-of-the-art electronic calculators for facilitating economy of parts through commonality of keyboard, power supply and visual display features. The electronic diary is comprised of a keyboard selector message panel, power supply means, a message storage and control unit, a clock and calendar unit, message display control logic, time comparison logic, audible alarm, and visual display means. Optionally, the electronic diary is comprised of a keyboard selector panel, power supply means, memory, microprocessor circuit, and visual display means. The electronic diary can serve to remind the user of an important message event through application of an audible alarm while visually displaying the associated message data.

Attention is also drawn to the US-patent 4,712,923, which discloses an electronic calendar for displaying time of the day, day of the week, and month-date-year with automatic adjustments for leap years and changes to and from standard and daylight times. The electronic calendar also displays preprogrammed and user programmed information such as holidays, holy days, birthdays, anniversaries, appointments, horoscopes, and other messages of a certain date. In addition, the electronic calendar incorporates a method for randomly selecting and displaying programmed messages, such as advertisements and safety slogans, at recurring times to reinforce the user's memory of such messages.

Moreover, attention is drawn to the US-patent 5,797,089, which discloses a personal communications terminal (PCT) in a case having a first half hingedly connected to a second half. The PCT operates in an open and a closed position and comprises a mobile telephone unit and a personal digital assistant (PDA) unit electronically connected to the mobile telephone unit. The PDA unit is a fully functional personal computer. The PDA unit comprises a memory for application software programs, a memory for data, a processor for performing operations with the data and the application programs, a modem for passing data between the PDA unit and the mobile telephone unit, and a mobile data interface for passing data between the PDA unit and the mobile telephone unit without utilizing the modem. When the PCT is in the open position, it forms two interior faces which include a PDA display screen on one face and a full alpha-numeric keyboard on the other face. The PCT may be operated as a standard wireless telephone, as a personal computer, or in an integrated mode for FAX, wireless data transfer, or sending and receiving short message service (SMS) messages.

Last but not least, attention is drawn to the document US-A-5,873,108, which discloses a device for displaying the text of an electronic document on a screen one word at a time, i.e. a cellular telephone combined with a personal digital assistand including calendar and agenda functions. The display device includes a processor for storing the electronic document; a one-word display for sequentially displaying only one word of the document at a given time; and a user control for allowing the user to control, in real time, the legibility characteristics such as color, font size and display speed. The device allows display speeds in excess of 3,000 words per minute to be achieved while at the same time allowing the user to alter or modify the legibility characteristics of the displayed words without the need for interrupting the display of words.

In accordance with the present invention a method for dynamically displaying a message corresponding to the current date on a screen of a wireless communication device during stand by mode, as set forth in claim 1, and a system for dynamically displaying a message corresponding to the current date on a screen of a wireless communication device during stand by mode, as set forth in claim 10 and 21. Preferred embodiments of the invention are disclosed in the dependent claims.

### SUMMARY OF THE INVENTION

The present invention is directed to a system and method for dynamically displaying a message corresponding to the current date on a display screen of a communication device during standby mode of operation of the communication device. The system includes a calendar having a plurality of dates. Each of the plurality of dates has a unique message associated therewith. The system also includes software that compares the current date with the plurality of dates from the calendar. The software then determines whether the current date matches one of the plurality of dates from the calendar. The display screen of the communication device displays the unique message if the current date matches one of the plurality of dates from the calendar. If the current date does not match one of the plurality of dates from the calendar, the display screen of the communication device displays a default message. The calendar may be capable of being edited by a user of the communication device such that additional unique messages may be assigned to any date from the calendar. Alternatively, a communication service provider for the communication device may pre-determine the unique message to be displayed for each of the plurality of dates.

### BRIEF DESCRIPTION OF THE DRAWINGS

In order that the manner in which the above-recited and other advantages and objects of the invention are obtained can be appreciated, a more particular description of the invention briefly described above will be rendered by reference to a specific embodiment thereof which is illustrated in the appended drawings. Understanding that these drawings depict only a typical embodiment of the invention and are not therefore to be considered limiting of its scope, the invention and the presently understood best mode thereof will be described and explained with additional specificity and detail through the use of the accompanying drawings.

FIG. 1 is a simplified process flow diagram illustrating steps which may be performed for implementing a dynamically updated banner system, in accordance with a preferred embodiment of the present invention.

FIG. 2 is a hardware block diagram showing the components of a system for implementing the method of FIG. 1, in accordance with a preferred embodiment of the present invention.

### DETAILED DESCRIPTION OF THE PREFERRED EMBODIMENT

Reference will now be made to the drawings wherein like structures are provided with like reference designations. It will be understood that the drawings included herewith only provide diagrammatic representations of the presently preferred structures of the present invention and that structures falling within the scope of the present invention may include structures different than those shown in the drawings.

The dynamically updated banner system of the present invention is used to dynamically display a message corresponding to the current date on a display screen of a communication device during standby mode of operation of the communication device. In other words, the present invention is directed to a banner that dynamically changes according to the current date. The communication device is preferably a portable cellular telephone, but may be any communication device having data storage capabilities and a display screen such as, for example, a pager. It is to be understood that the displaying of unique messages mentioned hereinbelow is preferably performed during standby mode of operation of the communication device. To assist in describing the invention, "standby mode of operation" is defined as the period when the communication device is on but when the user of the communication device is not involved in active communication through the communication device.

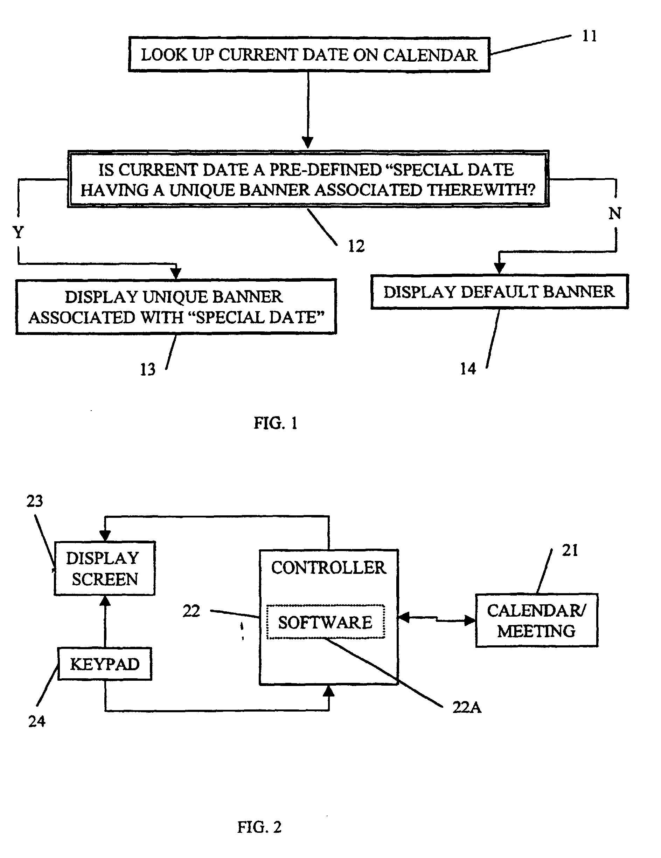

Referring now to FIGS. 1 and 2, there are shown process flow and hardware block diagrams for implementing the dynamically updated banner system, in accordance with a preferred embodiment of the present invention. As explained more fully below, the process shown in Fig. 1 is preferably implemented in software 22a on controller 22 (shown in Fig. 2).

In step 11 of the method for implementing the dynamically updated banner system, the current date is automatically accessed on a calendar 21 residing within the communication device through software 22a residing on controller 22. The calendar includes memory locations corresponding to a plurality of dates and is preferably a daily calendar. At least one of the dates from the plurality of dates has a unique message associated therewith. The dates that have a unique message associated therewith will be known hereinafter as "special dates".

In step 12, software 22a determines if the current date is a "special date" having a unique message associated therewith. This determination is made by a comparison of the current date with the plurality of dates within the calendar. The unique message includes a message other than the mere current calander date itself (i.e., July 5, 1999 or 07/05/99), and may include text and/or be in the form of an image. Possible unique text messages that may appear on the communication device's display screen 23 are, for example, "Anniversary" or "Matthew's Birthday". An example of a possible image to be used as the unique message is a "heart shape" which may be used to quickly express the arrival of an anniversary. Thus, the unique messages that appear on the display screen 23 visually express to the user of the communication device the occurrence of some event, holiday, appointment, reminder, etc. Other messages may also be used. The use of other messages will of course fall within the skill level of those having ordinary skill in the art in light of the present invention. As per step 13, a unique message is only displayed on the display screen 23 of the communication device if the current date is a "special date".

The calendar is preferably stored with "special dates" having common unique messages such as "Thanksgiving", "Christmas", etc. which appear on the display screen 23 by default on the corresponding date. These common unique messages may be pre-programmed by the communication device's service provider. In a particularly preferred embodiment, software 22a also provides a user with the ability to edit or modify any of the unique messages stored in the device. In this embodiment, by accessing a menu item from a list of menu items via a keypad 24, the user of the communication device is able to edit or modify the pre-programmed calendar or delete/enter/edit other unique messages. The entering of other unique messages will create new "special dates" that will function the same as the pre-programmed "special dates" discussed above.

The calendar may alternatively be initially stored without any "special dates". Of course, the user of the communication device will then have the option to manually enter unique messages via keypad 24 to create new "special dates". As in the pre-programmed scenario above, the user of the communication device will then be able to edit or modify the calendar or be able to delete/enter other unique messages via the keypad.

In either scenario, if the current date does not match any "special date", then the display screen 23 will display a default or original message as per step 14. Like the unique messages, this default or original message may be pre-programmed by the communication device's service provider or alternatively, may be created by the user of the communication device. Either way, the user of the communication device will then be able to edit or modify this default or original message via the keypad 24.

In a still further embodiment, software 22a may also provide the user with the ability to disable the banner system shown in FIG. 1. For example, display 23 may include another menu item whose function is to disable the dynamic nature of the banner system expressed hereinabove if so desired by the user of the communication device. By selecting this option, the default or original banner will indefinitely be displayed until the menu option is deselected by the user of the communication device. Preferably, this "dynamic banner disabling" menu option is disabled by default.

The banner system as set forth above provides for an efficient use of the display screen during standby mode of operation of the communication device. This is accomplished by providing a banner that not only displays meaningful information, but a banner that changes on a dynamic basis to thereby convey significant information relevant to the current date.

Furthermore, it is to be understood that although the present invention has been described with reference to a preferred embodiment, various modifications, known to those skilled in the art, may be made to the structures and process steps presented herein without departing from the spirit and scope of the invention as set forth in the several claims appended hereto.

## Claims

1. A method for dynamically displaying a message corresponding to the current date on a display screen (23) of a wireless communication device during standby mode of operation of the communication device, said method comprising the steps of:
• providing a calendar (21) having a plurality of dates, each of the plurality of dates having a unique message associated therewith;
• comparing (12) the current date with the plurality of dates from the calendar (21);
• determining (12) whether the current date matches one of the plurality of dates from the calendar (21) and whether the wireless communication device is in the standby mode;
• displaying (13) a unique message on the display screen (23) of the communication device during the standby mode if the current date matches one of the plurality of dates from the calendar (21); and
• displaying (14) a default banner if the current date does not match one of the plurality of dates from the calendar (21),
• wherein the unique message is a message different from the current date itself and the default banner.

2. The method of claim 1, further comprising the step of displaying a default message on the display screen (23) of the communication device if the current date does not match one of the plurality of dates from the calendar (21).

3. The method of claim 1, further comprising the step of assigning a unique user-defined message to any date from the calendar (21).

4. The method of claim 1, further comprising the step of editing the unique message by a user of the communication device.

5. The method of claim 1, wherein the unique message for each of the plurality of dates from the calendar (21) is predetermined by a communication service provider of the communication device.

6. The method of claim 5, further comprising the step of editing the unique message by a user of the communication device.

7. The method of claim 1, wherein the unique message is a text message.

8. The method of claim 1, wherein the unique message is in the form of an image.

9. The method of claim 1, wherein the communication device is a cellular telephone.

10. A system for dynamically displaying a message corresponding to the current date on a display screen (23) of a wireless communication device during standby mode of operation of the communication device, said system comprising:
• a calendar (21) having a plurality of dates, each of the plurality of dates having a unique message associated therewith;
• software (22a) that compares the current date with the plurality of dates from the calendar (21), and that determines whether the current date matches one of the plurality of dates from the calendar (21) and whether the wireless communication device is in the standby mode; and
• a controller (22), responsive to the software, that displays the unique message on the display screen (23) of the communication device during the standby mode if the current date matches one of the plurality of dates from the calendar (21) and displays a default banner if the current date does not match one of the plurality of dates from the calendar (21);
• wherein the unique message is a message different from the current date itself and the default banner.

11. The system of claim 10, wherein the display screen (23) of the communication device displays a default message if the current date does not match one of the plurality of dates from the calendar (21).

12. The system of claim 10, wherein the calendar (21) is capable of being edited by a user of the communication device such that additional unique messages may be assigned to any date from the calendar (21).

13. The system of claim 10, wherein the unique message for each of the plurality of dates is capable of being edited by a user of the communication device.

14. The system of claim 10, wherein the unique message for each of the plurality of dates is pre-determined by a communication service provider of the communication device.

15. The system of claim 14, wherein the unique message for each of the plurality of dates is capable of being edited by a user of the communication device.

16. The system of claim 10, wherein the unique message is a text message.

17. The system of claim 10, wherein the unique message is in the form of an image.

18. The system of claim 10, wherein the communication device is a cellular telephone.

19. The method of claim 10, wherein the unique message is "Anniversary".

20. The method of claim 10, wherein the unique message is "Thanksgiving".

21. A system for dynamically displaying a message corresponding to the current date on a display screen (23) of a wireless communication device during standby mode of operation of the communication device, said system comprising:
• means for providing a calendar (21) having a plurality of dates, each of the plurality of dates having a unique message associated therewith;
• means for comparing the current date with the plurality of dates from the calendar (21);
• means for determining whether the current date matches one of the plurality of dates from the calendar (21) and whether the wireless communication device is in the standby mode; and
• means for displaying a unique message on the display screen (23) of the communication device during the standby mode if the current date matches one of the plurality of dates from the calendar (21) and displaying a default banner if the current date does not match one of the plurality of dates from the calendar (21);
• wherein the unique message is a message different from the current date itself and the default banner.

## Revendications

1. Procédé d'affichage dynamique d'un message correspondant à la date courante sur un écran d'affichage (23) d'un dispositif de communication sans fil pendant un mode de repos du dispositif de communication, ce procédé comprenant les étapes suivantes :
prévoir un calendrier (21) comportant une pluralité de dates, chacune de. la pluralité de dates étant associée à un message spécifique ;
comparer (12) la date courante à la pluralité de dates du calendrier (21) ;
déterminer (12) si la date courante concorde avec une de la pluralité de dates du calendrier (21) et si le dispositif de communication sans fil est dans le mode de repos ;
afficher (13) un message spécifique sur l'écran d'affichage (23) du dispositif de communication pendant le mode de repos si la date courante concorde avec l'une de la pluralité de dates du calendrier (21) ; et
afficher (14) un drapeau de défaut si la date courante ne concorde pas avec l'une de la pluralité de dates du calendrier (21) ;
dans lequel le message spécifique est un message distinct de la date courante elle-même et du drapeau de défaut.

2. Procédé selon la revendication 1, comprenant en outre l'étape d'affichage d'un message de défaut sur l'écran d'affichage (23) du dispositif de communication si la date courante ne concorde pas avec l'une de la pluralité de dates du calendrier (21).

3. Procédé selon la revendication 1, comprenant en outre l'étape consistant à affecter un message spécifique défini par l'utilisateur à une date quelconque du calendrier (21).

4. Procédé selon la revendication 1, comprenant en outre l'étape consistant à éditer le message spécifique par un utilisateur du dispositif de communication.

5. Procédé selon la revendication 1, dans lequel le message spécifique pour chacune de la pluralité de dates du calendrier (21) est déterminé par un fournisseur de service du dispositif de communication.

6. Procédé selon la revendication 5, comprenant en outre l'étape consistant à éditer le message spécifique par un utilisateur du dispositif de communication.

7. Procédé selon la revendication 1, dans lequel le message spécifique est un message de texte.

8. Procédé selon la revendication 1, dans lequel le message spécifique est sous forme d'une image.

9. Procédé selon la revendication 1, dans lequel le dispositif de communication est un téléphone cellulaire.

10. Système d'affichage dynamique d'un message correspondant à la date courante sur un écran d'affichage (23) d'un dispositif de communication sans fil pendant un mode de repos du dispositif de communication, le système comprenant :
un calendrier (21) ayant une pluralité de dates, chacune de la pluralité de dates étant associée à un message spécifique ;
un logiciel (22a) qui compare la date courante à la pluralité de dates du calendrier (21) et qui détermine si la date courante concorde avec l'une de la pluralité de dates du calendrier (21) et si le dispositif de communication sans fil est dans le mode de repos ; et
un contrôleur (22) agissant en réponse au logiciel qui affiche le message spécifique sur l'écran d'affichage (23) du dispositif de communication pendant le mode de repos si la date courante concorde avec une de la pluralité de dates du calendrier (21) et affiche un drapeau de défaut si la date courante ne concorde pas avec l'une de la pluralité de dates du calendrier (21) ;
dans lequel le message spécifique est un message distinct de la date courante elle-même et du drapeau de défaut.

11. Dispositif selon la revendication 10, dans lequel l'écran d'affichage (23) du dispositif de communication affiche un message de défaut si la date courante ne concorde pas avec l'une de la pluralité de dates du calendrier (21).

12. Système selon la revendication 10, dans lequel le calendrier (21) est apte à être édité par un utilisateur du dispositif de communication de sorte que des messages spécifiques supplémentaires peuvent être affectés à une date quelconque du calendrier (21).

13. Système selon la revendication 10, dans lequel le message spécifique pour chacune de la pluralité de dates peut être édité par un utilisateur du dispositif de communication.

14. Système selon la revendication 10, dans lequel le message spécifique pour chacune de la pluralité de dates est déterminé par un fournisseur de service du dispositif de communication.

15. Système selon la revendication 14, dans lequel le message spécifique pour chacune de la pluralité de dates peut être édité par un utilisateur du dispositif de communication.

16. Système selon la revendication 10, dans lequel le message spécifique est un message de texte.

17. Système selon la revendication 10, dans lequel le message spécifique est sous forme d'une image.

18. Système selon la revendication 10, dans lequel le dispositif de communication est un téléphone cellulaire.

19. Système selon la revendication 10, dans lequel le message spécifique est "Anniversaire".

20. Système selon la revendication 10, dans lequel le message spécifique est "Thanksgiving".

21. Système d'affichage dynamique d'un message correspondant à une date courante sur un écran d'affichage (23) d'un dispositif de communication sans fil pendant un mode de repos du dispositif de communication, ce système comprenant :
des moyens pour prévoir un calendrier (21) comportant une pluralité de dates, chacune de la pluralité de dates étant associée à un message spécifique ;
des moyens pour comparer la date courante à la pluralité de dates du calendrier (21) ;
des moyens pour déterminer si la date courante concorde avec une de la pluralité de dates du calendrier (21) et si le dispositif de communication sans fil est dans le mode de repos ; et
des moyens pour afficher un message spécifique sur l'écran d'affichage (23) du dispositif de communication pendant le mode de repos si la date courante concorde avec l'une de la pluralité de dates du calendrier (21), et pour afficher un drapeau de défaut si la date courante ne concorde pas avec l'une de la pluralité de dates du calendrier (21) ;
dans lequel le message spécifique est un message distinct de la date courante elle-même et du drapeau de défaut.

## Patentansprüche

1. Ein Verfahren zum dynamischen Anzeigen einer Nachricht entsprechend einem momentanen Datum auf einer Bildschirmanzeige (23) einer drahtlosen Kommunikationsvorrichtung während einer Standby-Modusbetriebsart der Kommunikationsvorrichtung, wobei das Verfahren die folgenden Schritte aufweist:
Vorsehen eines Kalenders (21) mit einer Vielzahl von Daten, wobei jede der Vielzahl von Daten eine einzelne bzw. individuelle Nachricht zugeordnet hat;
Vergleichen (12) des momentanen Datums mit der Vielzahl von Daten aus dem Kalender (21);
Bestimmen (12), ob das momentane Datum mit einem der Vielzahl von Daten aus dem Kalender (21) übereinstimmt, und ob die drahtlose Kommunikationsvorrichtung im Standby-Modus ist;
Anzeigen (13) einer einzelnen Nachricht auf der Bildanzeige (23) der Kommunikationsvorrichtung während des Standby-Modus, und zwar wenn das momentane Datum mit einem der Vielzahl von Daten aus dem Kalender (21) übereinstimmt; und
Anzeigen (14) eines voreingestellten Banners, wenn das momentane Datum nicht mit einem der Vielzahl von Daten aus dem Kalender (21) übereinstimmt,
wobei die einzelne Nachricht eine Nachricht ist, die sich von dem momentanen Datum selbst und dem voreingestellten Banner unterscheidet.

2. Verfahren nach Anspruch 1, das weiterhin den Schritt des Anzeigens einer voreingestellten Nachricht auf der Bildanzeige (23) der Kommunikationsvorrichtung beinhaltet, und zwar wenn das momentane Datum nicht mit einem der Vielzahl von Daten aus dem Kalender (21) übereinstimmt.

3. Verfahren nach Anspruch 1, das weiterhin den Schritt des Zuweisens einer einzelnen benutzerdefinierten Nachricht zu einem beliebigen Datum aus dem Kalender (21) beinhaltet.

4. Verfahren nach Anspruch 1, das weiterhin den Schritt des Editierens der einzelnen Nachricht durch einen Benutzer der Kommunikationsvorrichtung aufweist.

5. Verfahren nach Anspruch 1, wobei die einzelne Nachricht für jedes der Vielzahl von Daten aus dem Kalender (21) durch einen Kommunikationsserviceprovider der Kommunikationsvorrichtung vorbestimmt ist.

6. Verfahren nach Anspruch 5, das weiterhin den Schritt des Editierens der einzelnen Nachricht durch einen Benutzer der Kommunikationsvorrichtung aufweist.

7. Verfahren nach Anspruch 1, wobei die einzelne Nachricht eine Textnachricht ist.

8. Verfahren nach Anspruch 1, wobei die einzelne Nachricht die Form eines Bildes besitzt.

9. Verfahren nach Anspruch 1, wobei die Kommunikationsvorrichtung ein Zellen- bzw. Mobiltelefon ist.

10. Ein System zum dynamischen Anzeigen einer Nachricht entsprechend einem momentanen Datum auf einer Bildschirmanzeige (23) einer drahtlosen Kommunikationsvorrichtung während einer Standby-Modus-Betriebsart der Kommunikationsvorrichtung, wobei das System Folgendes aufweist:
einen Kalender (21) mit einer Vielzahl von Daten, wobei jede der Vielzahl von Daten eine einzelne bzw. individuelle Nachricht zugeordnet hat;
eine Software (22a), die das momentane Datum mit der Vielzahl von Daten aus dem Kalender (21) vergleicht und die bestimmt, ob das momentane Datum mit einem aus der Vielzahl von Daten aus dem Kalender (21) übereinstimmt und ob die drahtlose Kommunikationsvorrichtung sich in dem Standby-Modus befindet; und
ein Controller (22), ansprechend auf die Software, wobei der Controller die einzelne Nachricht auf der Bildschirmanzeige (23) der Kommunikationsvorrichtung während des Standby-Modus anzeigt, und zwar wenn das momentane Datum mit einem der Vielzahl von Daten aus dem Kalender (21) übereinstimmt, und ein voreingestelltes Banner anzeigt, wenn das momentane Datum nicht mit einem der Vielzahl von Daten aus dem Kalender (21) übereinstimmt;
wobei die einzelne Nachricht eine Nachricht ist, die sich von dem momentanen Datum selber und dem voreingestellten Banner unterscheidet.

11. System nach Anspruch 10, wobei die Bildschirmanzeige (23) der Kommunikationsvorrichtung eine voreingestellte Nachricht anzeigt, wenn das momentane Datum nicht mit einem der Vielzahl von Daten aus dem Kalender (21) übereinstimmt.

12. System nach Anspruch 10, wobei der Kalender (21) in der Lage ist, durch einen Benutzer der Kommunikationsvorrichtung editiert zu werden, so dass zusätzliche einzelne bzw. einzigartige Nachrichten jedem beliebigen Datum des Kalenders (21) zugewiesen werden können.

13. System nach Anspruch 10, wobei die einzelne Nachricht für jede der Vielzahl von Daten in der Lage ist, durch einen Benutzer der Kommunikationsvorrichtung editiert zu werden.

14. System nach Anspruch 10, wobei die einzelne Nachricht für jede der Vielzahl von Daten durch einen Kommunikationsserviceprovider der Kommunikationsvorrichtung vorbestimmt ist.

15. System nach Anspruch 14, wobei die einzelne Nachricht für jede der Vielzahl von Daten durch einen Benutzer der Kommunikationsvorrichtung editiert werden kann.

16. System nach Anspruch 10, wobei die einzelne Nachricht eine Textnachricht ist.

17. System nach Anspruch 10, wobei die einzelne Nachricht in der Form eines Bildes gestaltet ist.

18. System nach Anspruch 10, wobei die Kommunikationsvorrichtung ein Zellen- bzw. Mobiltelefon ist.

19. Verfahren nach Anspruch 10, wobei die einzelne Nachricht "Jahrestag" bzw. "Jubiläum" ist.

20. Verfahren nach Anspruch 10, wobei die einzelne Nachricht "Erntedankfest" bzw. "Thanksgiving" ist.

21. System zum dynamischen Anzeigen einer Nachricht entsprechend dem momentanen Datum auf einer Bildschirmanzeige (23) einer drahtlosen Kommunikationsvorrichtung während der Standby-Modusbetriebsart der Kommunikationsvorrichtung, wobei das System Folgendes aufweist:
Mittel zum Vorsehen eines Kalenders (21) mit einer Vielzahl von Daten, wobei jedem der Vielzahl von Daten eine einzelne Nachricht hierzu zugeordnet ist;
Mittel zum Vergleichen des momentanen Datums mit der Vielzahl von Daten aus dem Kalender (21);
Mittel zum Bestimmen, ob das momentane Datum mit einem der Vielzahl von Daten aus dem Kalender (21) übereinstimmt und ob die drahtlose Kommunikationsvorrichtung sich in dem Standby-Modus befindet; und
Mittel zum Anzeigen einer einzelnen Nachricht auf der Bildschirmanzeige (23) der Kommunikationsvorrichtung während des Standby-Modus, und zwar wenn das momentane Datum mit einem der Vielzahl von Daten aus dem Kalender (21) übereinstimmt, und Anzeigen eines voreingestellten Banners, wenn das momentane Datum nicht mit einem der Vielzahl von Daten aus dem Kalender (21) übereinstimmt;
wobei die einzelne Nachricht eine Nachricht ist, die sich von dem momentanen Datum selbst und dem voreingestellten Banner unterscheidet.
